# Europäisches Patentamt

(19) **European Patent Office**

**Office européen des brevets**

(11) Publication number: **0 196 800**
**B1**

(12) **EUROPEAN PATENT SPECIFICATION**

(45) Date of publication of patent specification: **18.07.90**

(21) Application number: **86301644.0**

(22) Date of filing: **07.03.86**

(51) Int. Cl.⁵: **C 22 B 13/02, C 22 B 7/00, H 01 M 10/54**

(54) **Secondary lead production.**

(30) Priority: **07.03.85 AU 9598/85**

(43) Date of publication of application:
**08.10.86 Bulletin 86/41**

(45) Publication of the grant of the patent:
**18.07.90 Bulletin 90/29**

(84) Designated Contracting States:
**BE DE FR GB IT SE**

(56) References cited:
**EP-A-0 053 594**
**EP-A-0 132 243**
**DE-A-3 243 645**
**FR-A-2 297 254**
**US-A-4 251 271**

(73) Proprietor: **MOUNT ISA MINES LIMITED**
**160 Ann Street**
**Brisbane, QLD 4000 (AU)**

(72) Inventor: **Hollis, Richard Graham**
**1, Steelcon Parade**
**Mount Isa Queensland (AU)**

(74) Representative: **Wilkinson, Stephen John et al**
**c/o Stevens, Hewlett & Perkins 5 Quality Court**
**Chancery Lane**
**London WC2A 1HZ (GB)**

Courier Press, Leamington Spa, England.

# EP 0 196 800 B1

**Description**

This invention relates to an apparatus and a method for producing lead from lead sulphate and lead oxide scrap.

More particularly, this invention is concerned with the efficient recovery of lead from used automobile lead-acid storage batteries.

Heretofore, used storage batteries were charged whole, or shredded, into a blast furnace along with coke and chalk. The plates, which consist of lead metal grids covered with a paste of lead oxide PbO plus lead sulphate $PbSO_4$ were reduced to lead by the coke, also produced was a slag containing FeO, $SiO_2$ and CaO.

Otherwise the practice was to first shred or comminute the batteries and separate out the rubber or plastic of the casings before processing. By adding water to the small particles produced by comminution, the lighter particles float to the surface and are removed. The heavier particles, lead and lead compounds, are then passed over a rotary vacuum filter to reduce their water content to about 10%. By this means a wet battery paste was made as a filter cake and dried. This dried filter cake is subjected to various processes. One process utilizes a long rotary kiln where the pre-dried battery paste is mixed with coke, soda ash and iron chips on a belt feeder before being charged into the oil-fired kiln where the mixture is heated to 1300°C. to accomplish reduction of the $PbO/PbSO_4$ to molten lead. After the PbO is reduced, oxides of arsenic, antimony and other impurities are also reduced to base metals.

In another process the lead paste is charged into an oil-fired rotary furnace heated to 950°C by the oxidation reaction and the combustion of the fuel oil.

Another process utilizes a reverbatory furnace.

The prior art methods are capital intensive and the energy costs for pre-mixing, drying and reactor heating are high. The product lead contains antimony (used in battery grids) which must separately be removed to obtain soft lead. One such process is described in EP—A—0132243 according to which lead and lead-alloying elements are recovered from battery scrap type lead waste products and fractions thereof, such as battery mud and similar oxidic-sulphatic materials, and reduced in a furnace in the absence of a slag or flux at 1050°C to 1250°C while being agitated so as to obtain a molten lead phase in which the alloying elements, such as antimony, are dissolved. In that process the resultant lead contains between 1.2 and 3.0% of antimony which must subsequently be removed and it is an energy-intensive and costly process to conduct. This is because the process must be conducted at temperatures above 1050°C.

By comparison, the method and process of this invention is simple, inexpensive and quick. A smaller reactor can be employed, which reduces not only capital expenditure but fuel costs as well. Fume emissions are more easily contained and the premixing and drying steps are avoided. Preferred embodiments of the invention are fluxless and do not require inventories of lime and soda ash. A soft lead may be produced without a separate refining step.

The present invention provides a method for recovering lead from a scrap which contains lead oxide, lead sulfate and antimony in an oxidized state, said method comprising the steps of:

(a) continuously charging a refractory lined reaction vessel with the scrap together with a carbon, coke or coal reductant effective for reducing lead oxide;

(b) melting and agitating the charged material by means of a submerged lance at a temperature of from 900°C to 1150°C whereby lead oxide of the scrap is reduced to form molten lead;

(c) forming a slag layer above the molten lead produced in step (b);

(d) maintaining an amount of lead oxide in the slag layer;

(e) removing the molten lead, said removed lead having less than 0.5% by weight of antimony; and

(f) concentrating as oxide in the slag layer the antimony in the scrap.

The invention achieves its objectives by the vigorous mixing of the finely divided lead bearing fraction, also known as battery paste, with the reducing carbon and the flux or slag by a submerged lance of the type described in U.S. Patent No. 4,251,271. Pre-drying of the battery paste is not required nor is it necessary to premix the paste with the carbon reductant. Production of a PbS containing matte is prevented by the presence at all times of lead oxide in the slag. Part of the oxide is present in the lead paste, part is formed at the first product of reduction of $PbSO_4$.

Tests were made in a cylindrical refractory lined vessel sized to hold 250 Kg of reactants. Initial testing was performed on lead smelter fume which is similar in chemical and mineralogical composition to battery paste, being Pb 72% and S 6%, but without the carbon or impurities such as antimony, arsenic and tin. Using an Sirosmelt* lance, molten lead was produced continuously from lead fume.

Following this, two tonnes of battery paste was reduced in one continuous run over ten hours. The effect of varying coke rates and temperatures was investigated.

During this trial 60 kg of paste was melted before coke addition started to provide a slag for lance protection. The paste, as wet pellets (10% moisture) was fed continuously, with lump coke, to the furnace. The oil combustion was set at 95% stoichiometry through the whole trial.

Based on the coke rate required to maintain a constant slag level in fume smelting the battery paste

*Sirosmelt is a trade mark, owned by CSIRO.

2

# EP 0 196 800 B1

reduction was started at 8% coke. This was much too high and 4% coke (4.4% on dry basis) proved to be the required level. Because PbO is always present in the slag arsenic and antimony oxides are not reduced to metal. Therefore the process produces soft lead (i.e., antimony and arsenic below 0.05%) directly. Battery paste melts to form a slag from which PbO is reduced to lead, while As and Sb oxides concentrate in the slag layer. The slag is fully reduced periodically to produce a high (5—30%) antimony lead masterbatch for alloying. Existing processes do not selectively reduce lead oxide and produce hard lead which must be further treated to remove antimony.

In addition, the process is fluxless (existing processes add lime and soda ash) and it operates at a low temperature (down to 900°C). No feed preparation is required.

The reduction proceeded satisfactorily between 900°C and 1150°C but a suitable operating range was found to be 950°C±20°C.

Test results were as follows:

| Weight of wet battery paste treated: | 1 900 kg |
| Weight of lead in battery paste: | 1 212 |
| Product: Lead in Slag | 80.5 |
| Bullion | 930 |
| Fume | 160.3 |
| Total lead recovered | 1 170.8 (97%) |
| Oil consumption: | 75.9 kg/dry tonne paste. |

Bullion and slag were tapped from the furnace and assayed. Samples of fume were collected from the ventilation baghouse and also analysed.

Resultant product recovered averaged according to the following analysis:

| | | Pb | S | AS | Sb | Sn | Fe | SiO$_2$ |
|---|---|---|---|---|---|---|---|---|
| Lead | Bullion | — | 0.01 | 0.001 | 0.013 | 0.001 | — | — |
| | Slag | 55.7 | 0.1 | 0.100 | 1.64 | 0.06 | 5.4 | 8.5 |
| | Fume | 61.4 | 6.4 | 0.424 | 0.182 | 0.01 | — | — |

A mass balance worked out as: bullion 77%, slag 7%, fume 13%, lost 3% on the basis of the lead in the paste as 100%.

Antimony is present in battery paste since an antimonal-lead alloy is used in battery grids. Smaller quantities of tin and arsenic are also present in scrap lead. The order of reduction of the elements is Pb, Sb then Sn and As. Thus, while there is unreduced lead oxide present, antimony, arsenic and tin will also concentrate in the oxide slag.

The 250 kg pilot plant was operated at 220 kg/hr dry paste feed. A volume scale-up to a demonstration plant size indicated a feed rate of 9 tph dry paste (10 tph wet) and 15 tph is comfortably handled.

A commercial plant consists of a vessel 5 m high×1.8 m ID, lined with 400 mm of chrome magnesite bricks.

The lance consists of 150 mm NB mild steel pipe with a 2 m stainless steel tip (T316 or 310). Swirlers are of the low pressure drop type which can operate on air at 100—120 kPa. Either oil or natural gas is used as fuel.

The vessel is continously fed via conveyor belt with battery paste (up to 10% moisture) and coke (−50 mm). Fume recycle is continuous or alternatively fume can be retained and fed back instead of paste.

Tapping of lead bullion occurs every 90 minutes leaving unreduced slag in the furnace. Antimony and slag minerals from coke ash concentrate in this slag, and require a periodic slag reduction run.

Slag reduction is carried out by addition of excess coke and produces a bullion containing antimony (about 20%). The slag from this batch is fully tapped and discarded. Its composition depends on the ash constituents of the coke used and a soda ash flux may be necessary in order to maximise antimony recovery.

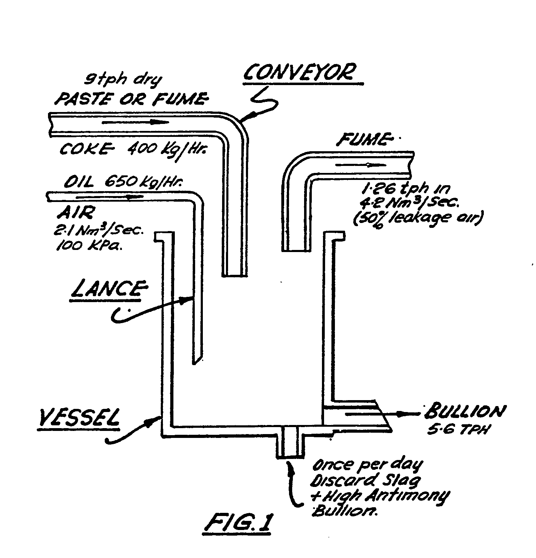

A typical flowsheet for such a plant is shown in the accompanying drawing, Figure 1.

## Claims

1. A method for recovering lead from a scrap which contains lead oxide, lead sulfate and antimony in an oxidized state, said method comprising the steps of:

3

(a) continuously charging a refractory lined reaction vessel with the scrap together with a carbon, coke or coal reductant effective for reducing lead oxide;

(b) melting and agitating the charged material by means of a submerged lance at a temperature of from 900°C to 1150°C whereby lead oxide of the scrap is reduced to form molten lead;

(c) forming a slag layer above the molten lead produced in step (b);

(d) maintaining an amount of lead oxide in the slag layer;

(e) removing the molten lead, said removed lead having less than 0.5% by weight of antimony; and

(f) concentrating as oxide in the slag layer the antimony in the scrap.

2. The method of claim 1 wherein the scrap is battery paste from lead acid batteries.

3. The method of claim 2 wherein the reductant is coke or coal charged at a rate of less than 8% by weight of paste, on a dry basis.

4. The method of claim 1 wherein the submerged lance is fired by a mixture of hydrocarbon fuel and air or oxygen, said mixture having less oxygen than stoichiometrically required for complete combustion of the oil.

5. The method of claim 4 conducted at a temperature of between 910°C and 990°C.

6. The method of claim 1 wherein antimony oxide from the scrap concentrated in the slag layer is subsequently reduced to produce an antimony lead masterbatch containing from 5 to 30% antimony by weight.

**Patentansprüche**

1. Verfahren zur Wiedergewinnung von Blei aus Abfall, der Bleioxid, Bleisulfat und Antimon in einem oxidierten Zustand enthält, wobei das Verfahren die Schritte umfaßt:

a) ständiges Beschicken eines feuerfest ausgekleideten Reaktionsbehälters mit Abfall zusammen mit einem Kohlenstoff-, Koks- oder Kohle Reduktionsmittel, das bei der Reduktion von Bleioxid wirksam ist;

b) Schmelzen und Bewegen des beschickten Materials mit Hilfe einer eingetauchten Lanze bei einer Temperatur von 900°C bis 1150°C, wobei Bleioxid des Abfalles reduziert wird zu geschmolzenem Blei;

c) Bilden einer Schlackeschicht auf dem in Schritt b) produzierten geschmolzenen Blei;

d) Beibehalten einer bestimmten Menge Bleioxid in der Schlackeschicht;

e) Entfernen des geschmolzenen Bleis, wobei dieses Blei weniger als 0,5 Gewichts-% Antimon enthält; und

f) Konzentrieren des Antimons im Abfall als Oxid in der Schlackeschicht.

2. Verfahren nach Anspruch 1, worin der Abfall Batteriepaste aus Blei-Säure-Batterien ist.

3. Verfahren nach Anspruch 2, worin das Reduktionsmittel Koks oder Kohle ist, beschickt in einem Verhältnis von weniger als 8% des Gewichts der Paste, auf trockener Basis.

4. Verfahren nach Anspruch 1, worin die untergetauchte Lanze mit einer Mischung aus Kohlenwasserstoff-Brennmaterial und Luft oder Sauerstoff befeuert wird, wobei die Mischung weniger Sauerstoff enthält als stöchiometrisch für die vollständige Verbrennung des Öls benötigt wird.

5. Verfahren nach Anspruch 4, durchgeführt bei einer Temperatur zwischen 910°C und 990°C.

6. Verfahren nach Anspruch 1, worin Antimonoxid aus dem Abfall, das in der Schlackeschicht konzentriert ist, anschließend reduziert wird, um eine Antimon, Blei angereicherte Mischung einhaltend von 5 bis 30 Gewichts-% Antimon zu produzieren.

**Revendications**

1. Procédé de récupération du plomb à partir d'un déchet qui contient de l'oxyde de plomb, du sulfate de plomb et de l'antimoine à l'état oxydé, ledit procédé comprenant les étapes consistant à:

(a) introduire en continu le déchet dans un récipient de réaction, à garniture intérieure réfractaire, conjointement avec un réducteur de type carbone coke ou charbon, efficace pour réduire l'oxyde de plomb;

(b) faire fondre et agiter le matériau introduit à l'aide d'une lance immergée, à une température allant de 900°C à 1150°C, ce par quoi l'oxyde de plomb du déchet est réduit pour former du plomb fondu;

(c) former une couche de scories au-dessus du plomb fondu obtenu à l'étape (b);

(d) maintenir une quantité d'oxyde de plomb dans la couche de scories;

(e) retirer le plomb fondu, ledit plomb retiré ayant moins de 0,5% en poids d'antimoine; et

(f) concentrer sous forme d'oxyde dans la couche de scories l'antimoine présent dans le déchet.

2. Procédé selon la revendication 1, dans lequel le déchet est une pâte pour batteries provenant de batteries acide-plomb.

3. Procédé selon la revendication 2, dans lequel le réducteur est du coke ou du charbon introduit à un taux de moins de 8% en poids de la pâte, à l'état sec.

4. Procédé selon la revendication 1, dans lequel la lance immergée est alimentée par un mélange que l'on enflamme de combustible hydrocarboné et d'air ou d'oxygène, ledit mélange comprenant moins d'oxygène que la quantité stoechiométrique requise pour la combustion complète de l'huile.

5. Procédé selon la revendication 4, conduit à une température se situant entre 910°C et 990°C.

6. Procédé selon la revendication 1, dans lequel l'oxyde d'antimoine provenant du déchet, qui est concentré dans la couche de scories, est réduit ensuite pour produire un mélange-maître de plomb à l'antimoine contenant de 5 à 30% en poids d'antimoine.

9tph dry
PASTE OR FUME

COKE 400 Kg/Hr.

OIL 650 Kg/Hr.

AIR
2·1 Nm³/Sec.
100 KPa.

CONVEYOR

FUME

1·26 tph in
4·2 Nm³/Sec.
(50% leakage air)

LANCE

VESSEL

BULLION
5·6 TPH

Once per day
Discard Slag
+ High Antimony
Bullion.

FIG.1